# EUROPÄISCHE PATENTSCHRIFT

(11) **EP 3 118 087 B1**
(45) Veröffentlichungstag und Bekanntmachung des Hinweises auf die Patenterteilung: **14.11.2018**
(21) Anmeldenummer: 16177757.8
(22) Anmeldetag: 04.07.2016
(51) Int. Cl.: B62D 25/06, B62D 25/20, B62D 25/02, B62D 31/00, B62D 29/04, B62D 29/00

(54) **FLÄCHENELEMENT FÜR EIN CAMPINGFAHRZEUG ODER MOBILHEIM**
PANEL FOR A CAMPING VEHICLE OR MOBILE ACCOMMODATION STRUCTURE
ÉLEMENT DE SURFACE POUR UN CAMPING-CAR OU MOBILE-HOME

(30) Priorität: 14.07.2015 DE 102015111421
(43) Veröffentlichungstag der Anmeldung: 18.01.2017
(73) Patentinhaber: Knaus Tabbert GmbH, 94118 Jandelsbrunn (DE)
(72) Erfinder: Thaler, Jürgen, 94164 Sonnen (DE); Wachtveitl, Kurt, 94136 Thyrnau (DE)
(74) Vertreter: advotec.

(56) Entgegenhaltungen:
- CH-A- 412 306
- CN-U- 202 368 683
- DE-A1- 2 826 178
- DE-A1-102010 028 943
- DE-U1-202007 013 805
- US-A- 5 589 243
- US-A1- 2015 102 631
- US-B1- 7 000 978

## Beschreibung

Die vorliegende Erfindung betrifft ein Flächenelement, insbesondere Wandelement für ein Campingfahrzeug, insbesondere Wohnwagen, Reisemobil etc. Die vorliegende Erfindung betrifft ferner ein Verfahren zur Herstellung eines derartigen Flächenelements.

Der Begriff "Flächenelement" im Sinne der vorliegenden Erfindung umfasst beispielsweise die Seitenwände oder Abschnitte von Seitenwänden von Campingfahrzeugen. Des Weiteren können unter dem Begriff "Flächenelement" auch das Dach oder Dachabschnitte, der Boden oder Bodenabschnitte sowie die Heckwand oder Heckwandabschnitte eines Campingfahrzeuges verstanden werden. Der Begriff "Flächenelement" ist jedoch nicht auf Außenwände eines Campingfahrzeuges beschränkt. Er kann vielmehr auch Innenwände oder Wände von Möbeln, welche sich innerhalb eines Campingfahrzeuges befinden, umfassen. Bevorzugt handelt es sich bei dem erfindungsgemäßen Flächenelement jedoch um eine Seitenwand eines Campingfahrzeuges.

Die aus dem Stand der Technik bekannten Flächenelemente für Campingfahrzeuge weisen neben Metall- oder Kunststoffelementen in der Regel auch Elemente aus Holz, wie beispielsweise Holzleisten auf. Der Nachteil hierbei besteht insbesondere darin, dass Holz im Laufe der Zeit seine Form und Struktur verändert. So kann Holz aufquellen, wenn es mit Wasser oder Wasserdampf in Berührung kommt. Durch das Aufquellen von beispielsweise Holzleisten, welche zur Stabilisierung von Flächenelementen, insbesondere von Seitenwänden verwendet werden, dehnen sich diese aus, sodass sie sich in der Außenhaut des Campingfahrzeuges abzeichnen können. Dies führt zu einer unschönen Optik. Ein weiterer Nachteil von Holz besteht darin, dass es im Laufe der Zeit verrotten kann und dann seine Stabilisierungsfunktion nach und nach verliert. Aus den vorstehend genannten Gründen wird immer häufiger versucht, die Holzelemente, wie beispielweise Holzleisten gegen Kunststoffelemente, wie beispielweise PU-Leisten auszutauschen. Dies ist aufwendig und sehr kostenintensiv. Zudem wird bei beiden Varianten viel Lagerplatz durch die Holz- und Kunststoffelemente in Anspruch genommen Als nächster Stand der Technik wird das Dokument CH412306 angesehen. Dieses Dokument zeigt ein Verfahren zur Herstellung eines Flächenelements für ein Campingfahrzeug oder Mobilheim, insbesondere Wohnwagen, Reisemobil, umfassend folgende Schritte: Herstellen einer Rahmenstruktur auf einer Unteren Formplatte durch Aufbringen von fließendem Harz in Bereiche zwischen Mittelschichten auf Fugenbänder, die wiederum in Harz getränkt sind. Nach dem Aushärten wird eine Deckschicht appliziert. Der vorliegenden Erfindung liegt die Aufgabe zugrunde, ein Verfahren zur Herstellung eines Flächenelements zur Verfügung zu stellen, welche die Nachteile aus dem Stand der Technik überwinden. Die Aufgabe der Erfindung war insbesondere, ein Flächenelement zur Verfügung zu stellen, welches einfach und kostengünstig herzustellen ist, ohne lose Elemente auskommen kann sowie eine verbesserte Qualität zeigt (wie z.B. glattere Oberfläche und/oder verbesserte Statik).

Die Aufgabe wird gelöst durch die Merkmale von Anspruch 1. Ein Flächenelement der eingangs genannten Art, umfasst eine Rahmenstruktur, welche aus einem aus einer Ausbringvorrichtung ausbringbaren, aushärtbaren Material geformt ist, ferner umfassend zwei mit der Rahmenstruktur verbundene Deckschichten, zwischen welchen die Rahmenstruktur angeordnet ist, sowie Isoliermaterial, welches mindestens teilweise die Zwischenräume der Rahmenstruktur ausfüllt und ebenfalls zwischen den Deckschichten angeordnet ist.

Die oben geschilderte Aufgabe, welche der Erfindung zugrunde liegt, wird gelöst durch ein Verfahren zur Herstellung eines Flächenelements für ein Campingfahrzeug oder Mobilheim,- nach Anspruch 1. Ein solches Verfahren umfasst auch folgende Schritte:
a) Herstellen einer Rahmenstruktur durch Aufbringen von fließfähigem, aushärtbarem Material in einer gewünschten Form auf eine Unterlage;
b) Aushärtenlassen, des fließfähigen, aushärtbaren Materials;
c) Verbinden der fertigen Rahmenstruktur mit mindestens einer Deckschicht.

Unter fließfähigem Material wird insbesondere pastenartiges oder zähflüssiges Material mit hoher Viskosität verstanden. Das ausbringbare Material der Rahmenstruktur wird bei der Herstellung eines erfindungsgemäßen Flächenelements in der Regel aus einer Ausbringvorrichtung auf eine Unterlage aufgebracht. Dies erfolgt in der Regel im Rahmen eines Gießverfahrens.

Die durch das erfindungsgemäße Verfahren herstellbaren Flächenelemente haben gegenüber Flächenelementen aus dem Stand der Technik diverse Vorteile. So können die Flächenelemente völlig frei von Holzelementen, insbesondere Holzleisten sein. Durch das erfindungsgemäße Verfahren kann eine Rahmenstruktur hergestellt werden, bei der sämtliche Strukturen, wie beispielsweise Leisten, aus demselben Material bestehen. Selbstverständlich können die einzelnen Elemente der Rahmenstruktur auch aus unterschiedlichen Materialien, Materialdicken etc. hergestellt werden. Ein weiterer Vorteil des erfindungsgemäßen Verfahrens besteht darin, dass beliebige Geometrien der Rahmenstruktur möglich sind. Ferner ist ein Formsowie Stoffschluss beim Herstellen der Rahmenstruktur möglich. Bestimmte Stellen können auf einfache Art und Weise verstärkt werden, indem an den zu verstärkenden Stellen mehr Material aufgetragen wird. Diese Stellen können beispielsweise zur Aufnahme von Befestigungsmitteln, wie beispielweise Schrauben dienen. Bei den Flächenelementen aus dem Stand der Technik werden hier oftmals Blechplättchen oder andere Strukturen verwendet.

Ein weiterer gravierender Vorteil besteht darin, dass das Vorproduzieren und Lagern bestimmter Rahmenstrukturelemente, wie beispielsweise Leisten durch das erfindungsgemäße Verfahren wegfallen. In der Regel erfolgt beim erfindungsgemäßen Verfahren das Aufbringen des fließfähigen, aushärtbaren Materials mit Hilfe einer Ausbringvorrichtung, deren Aktionen (z.B. Ausbringmenge, Bewegung im Raum etc.) in der Regel automatisch gesteuert werden können. Durch eben diese automatischen Abläufe können manuelle Tätigkeiten komplett ersetzt werden. Durch die Tatsache, dass auf Holz, insbesondere Holzleisten komplett verzichtet werden kann, können durch das erfindungsgemäße Verfahren Flächenelemente hergestellt werden, welche eine völlig ebene, optisch ansprechende Oberfläche aufweisen.

Zur Stabilisierung können einzelne Verbindungsstrukturen in notwendiger Breite sowie eventuell mit anderem Material/Dichte hergestellt werden. Partielle Bereiche (Hubbett-Verschraubungen) können mit gesondertem Material (z.B. faserverstärkt, höhere Dichte) hergestellt werden. Zudem ist beim erfindungsgemäßen Verfahren eine Gewichtseinsparung beim Fahrzeug durch Optimierung der Querschnitte möglich.

Das Material der Rahmenstruktur ist vorzugsweise eines aus der Gruppe, bestehend aus Kunststoff, faserverstärktem Kunststoff, naturfaserverstärktem Kunststoff, z.B. bambusfaserverstärktem oder durch Reisschalen verstärktem Kunststoff, Harz, Schaum, z.B. PU-Schaum. Diese Materialien haben besonders günstige physikalische Eigenschaften und eignen sich besonders gut zum Herstellen einer Rahmenstruktur eines erfindungsgemäßen Flächenelements, z.B. im Gießverfahren.

Bei einem Beispiel des Flächenelements ist das Isoliermaterial plattenförmig ausgebildet, wobei es vorzugsweise aus EPS oder XPS gefertigt ist. Unter EPS versteht man in der Materialkunde expandiertes Polystyrol. Unter XPS versteht man extrudiertes Polystyrol.

Bei einem weiteren Beispiel Flächenelements ist das Isoliermaterial fließfähig. So kann es beispielsweise in Form von Polystyrolkügelchen als Füllkörper oder Polyurethanschaum vorliegen.

Die Deckschichten des Flächenelements können beispielsweise aus Blech, Kunststoff oder Naturfaserwerkstoffen gefertigt sein.

Nachfolgend werden einige bevorzugte Verfahrensvarianten des erfindungsgemäßen Verfahrens beschrieben.

Bei einer Variante des erfindungsgemäßen Verfahrens wird die gewünschte Form der Rahmenstruktur in eine Platte aus Isoliermaterial, insbesondere aus EPS, XPS oder dergleichen eingebracht, insbesondere eingeschnitten oder eingefräst, wobei die Platte anschließend mit einer Deckschicht verbunden wird und dann das fließfähige, aushärtbare Material in die ausgeschnittenen Räume in der Platte zum Erstellen der Rahmenstruktur eingebracht wird. Das Isoliermaterial hat bei dieser Verfahrensvariante zwei Funktionen. Zum einen wirkt es isolierend, zum anderen bildet es eine Aufnahmeform für das Rahmenstruktur-Material.

Bei einer weiteren Verfahrensvariante wird das fließfähige aushärtbare Material, insbesondere NC-gesteuert, auf eine von zwei Deckschichten zur Erstellung der Rahmenstruktur aufgebracht. Anschließend wird fließfähiges Isoliermaterial in Zwischenräume der Rahmenstruktur eingebracht und dann die zweite Deckschicht auf die Rahmenstruktur aufgebracht, insbesondere aufgeklebt, sodass die Rahmenstruktur und das Isoliermaterial zwischen den beiden Deckschichten angeordnet ist. Das fließfähige Isoliermaterial kann beispielsweise automatisiert in Zwischenräume der Rahmenstruktur eingebracht werden. Diese Verfahrensvariante hat auch den Vorteil, dass das Isoliermaterial nur an bestimmten Stellen eingebracht werden kann.

Bei einer weiteren Variante des erfindungsgemäßen Verfahrens wird das fließfähige, aushärtbare Material, insbesondere NC-gesteuert, auf eine Arbeitsunterlage zur Erstellung der Rahmenstruktur aufgebracht, wobei die Rahmenstruktur anschließend mit einer Deckschicht verbunden, insbesondere verklebt wird und anschließend fließfähiges Isoliermaterial in Zwischenräume der Rahmenstruktur eingebracht wird und dann die zweite Deckschicht auf die Rahmenstruktur aufgebracht, insbesondere aufgeklebt wird, sodass die Rahmenstruktur und das Isoliermaterial zwischen den beiden Deckschichten angeordnet ist.

In der Regel wird das fließfähige, aushärtbare Material im Gießverfahren aufgebracht.

Bei einer Weiterbildung des erfindungsgemäßen Verfahrens wird die Rahmenstruktur in mindestens zwei Arbeitsschritten erstellt, wobei in den jeweiligen Arbeitsschritten vorzugsweise unterschiedliche Materialien und/oder unterschiedliche Materialstärken für unterschiedliche Rahmenstrukturabschnitte eingesetzt werden. So kann beispielsweise zunächst eine einstückig ausgebildete Grundrahmenstruktur erstellt werden. In einem zweiten Arbeitsgang können dann Details eingearbeitet werden.

Vorzugsweise wird nach dem Aufbringen der zweiten Deckschicht auf die Rahmenstruktur die gesamte Sandwich-Struktur weiterverarbeitet, indem insbesondere Fenster- und Türbereiche ausgefräst werden und/oder eine Außenkontur eingearbeitet wird. Auf diese Art und Weise kann beispielsweise entweder ein völlig ebenes Flächenelement oder ein gekrümmtes Flächenelement erstellt werden.

Vorzugsweise ist das fließfähige aushärtbare Material eines aus der Gruppe von Kunststoff, faserverstärktem Kunststoff, naturfaserverstärktem Kunststoff, z.B. bambusfaserverstärktem oder durch Reisschalen verstärktem Kunststoff, Harz, Schaum, z.B. PU-Schaum.

In der Regel wird vor dem Aufbringen der zweiten Deckschicht die Oberfläche der Verbundstruktur aus Rahmenstruktur und Isoliermaterial kalibriert, z.B. geschliffen, spanabhebend bearbeitet oder dergleichen. Hierdurch kann eine ebene Verbundstruktur geschaffen werden.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: den schematischen Ablauf einer ersten Variante des erfindungsgemäßen Verfahrens zur Herstellung eines Flächenelements;
- Fig. 2:: den schematischen Ablauf einer zweiten Variante des erfindungsgemäßen Verfahrens zur Herstellung eines Flächenelements;
- Fig. 3:: den schematischen Ablauf einer dritten Verfahrensvariante zur Herstellung eines Flächenelements;
- Fig. 4:: eine Draufsicht auf eine Rahmenstruktur eines erfindungsgemäßen Flächenelements.

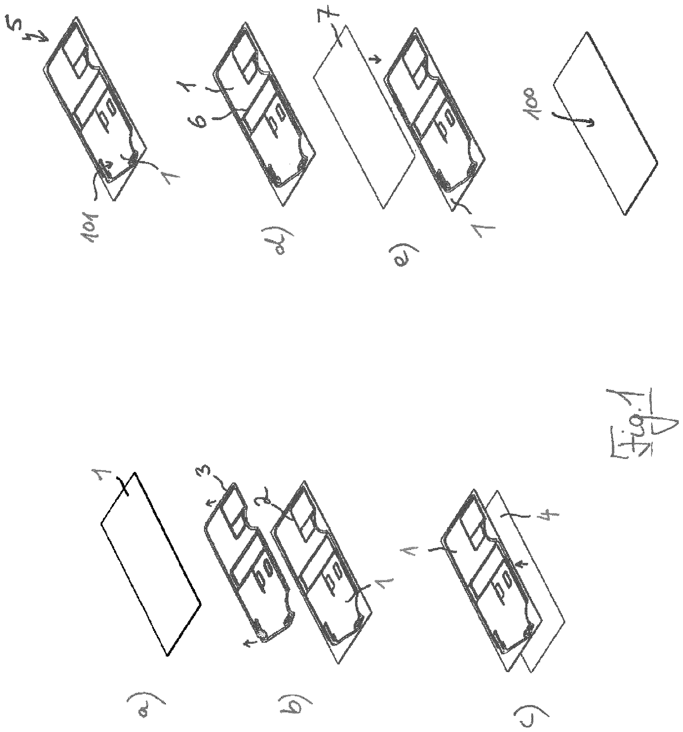

Fig. 1 zeigt schematisch die Vorgehensweise bei einer Variante des erfindungsgemäßen Verfahrens. Bei dieser Variante wird zunächst eine großformatige Platte 1 aus EPS oder XPS hergestellt (Schritt a)). Nun werden die gewünschten Konturen 2 einer Rahmenstruktur aus der Platte 1 ausgeschnitten oder ausgefräst. Die nicht benötigten Teile 3 werden entfernt (Schritt b)). Nun wird eine Deckschicht 4 aufgeklebt (Schritt c)). Die Deckschicht 4 entspricht im vorliegenden Fall der späteren Außenhaut oder Innenhaut einer Seitenwand eines Campingfahrzeuges. Die Verbundstruktur 5 aus der Deckschicht 4 und der ausgeschnittenen Platte 1 fungiert als Schablone 101 für die im nächsten Schritt herzustellende Rahmenstruktur. Hier werden die Hohlräume 2 in der Platte 1 mit fließfähigem Kunststoff aufgefüllt (Schritt d)). Nach dem Aushärten des Kunststoffs liegt die fertige Rahmenstruktur 6 vor. Nun wird die offene Fläche kalibriert. Dann wird eine zweite Deckschicht 7 aufgeklebt (Schritt e)). Diese zweite Deckschicht 7 fungiert später als Innenhaut oder Außenhaut einer Seitenwand eines Campingfahrzeuges. Nach dem Aufkleben der zweiten Deckschicht liegt nun ein fertiger Sandwichverbund vor, der einem Flächenelement in Form eines Wandelements 100 entspricht. Dieser kann nun weiterverarbeitet werden (z.B. Ausfräsen von Fenstern und/oder Türen, Einbringen einer Außenkontur etc.).

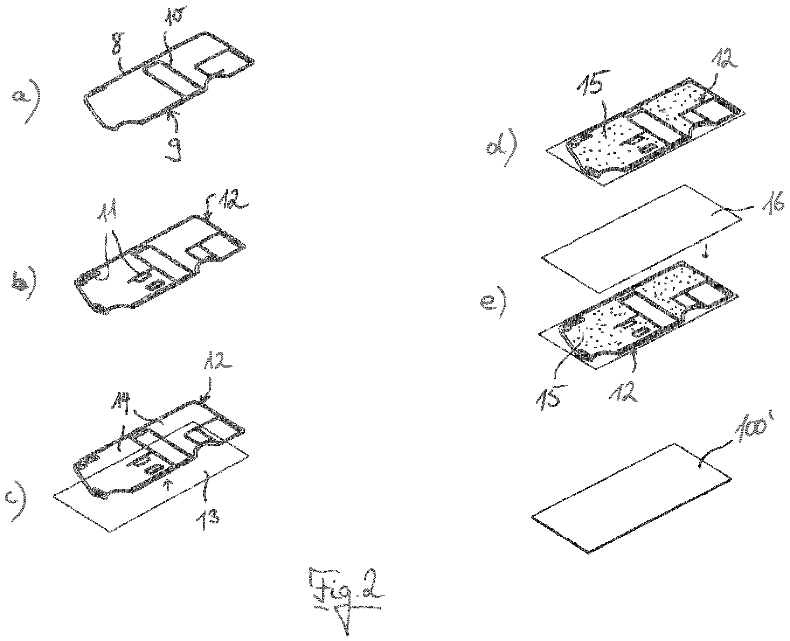

Fig. 2 zeigt schematisch den Ablauf einer weiteren Verfahrensvariante. Hierbei wird zunächst aus einer Ausbringvorrichtung fließfähiges Material 8 in einer gewünschten Form auf einen Arbeitstisch aufgebracht, sodass zunächst eine Grundrahmenstruktur 9 entsteht. Diese Grundrahmenstruktur 9 weist beispielsweise bereits eine Kontur 10 für eine Türe auf (Schritt a)).

Anschließend werden zusätzliche Strukturen 11 auf den Arbeitstisch aufgebracht. Die zusätzlichen Strukturen bestehen in diesem Fall aus einem anderen fließfähigen, aushärtbaren Material. Im vorliegenden Falle wurde Polyurethanschaum für die zusätzlichen Strukturen 11 verwendet. Schließlich liegt eine fertige Rahmenstruktur 12 vor (Schritt b)).

Nun wird eine Deckschicht 13 mit der Rahmenstruktur 12 verklebt (Schritt c)). Nun wird in die Zwischenräume 14 der Rahmenstruktur 12 fließfähiges Isoliermaterial 15 eingebracht (Schritt d)). Nach dem Aushärten der Rahmenstruktur 12 wird die offene Fläche kalibriert. Im nächsten Schritt wird eine zweite Deckschicht 16 auf die Rahmenstruktur 12 aufgeklebt.

Schließlich liegt auch hier ein fertiger Sandwichverbund vor, der einem erfindungsgemäßen Flächenelement 100' entspricht und weiterverarbeitet werden kann.

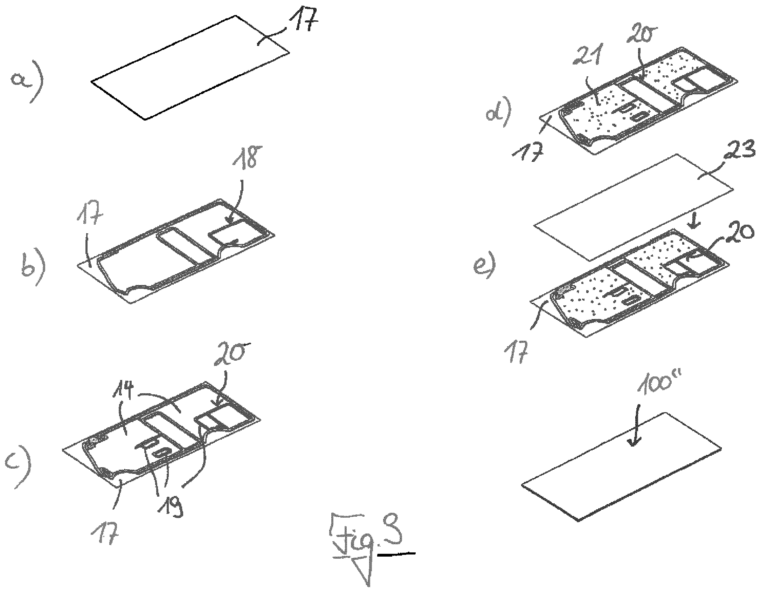

Fig. 3 zeigt eine schematische Darstellung des Ablaufs einer dritten Verfahrensvariante. Bei dieser Verfahrensvariante wird zunächst eine von zwei Deckschichten 17 auf einer Arbeitsfläche fixiert und optional mittels Unterdruck festgesaugt (Schritt a)).

Nun wird eine Grundrahmenstruktur 18 auf die Deckschicht 17 mittels einer Ausbringvorrichtung aufgebracht (Schritt b)).

In einem weiteren Verfahrensschritt werden nun zusätzliche Strukturen 19 auf die Deckschicht 17 aufgetragen (Schritt c)). Schließlich liegt eine fertige Rahmenstruktur 20 vor.

Nun wird in die Zwischenräume 14 der fertigen Rahmenstruktur 20 Isoliermaterial 21 eingebracht (Schritt d)). Das Isoliermaterial 21 wird jedoch nicht in Tür- und Fensterausschnitte 22 eingebracht. Nach dem Aushärten des Rahmenstrukturmaterials wird die Fläche kalibriert.

Nun wird eine zweite Deckschicht 23 auf die Rahmenstruktur 20 aufgeklebt (Schritt e)). Schließlich liegt ein fertiger Sandwichverbund vor, der ein erfindungsgemäßes Flächenelement 100" darstellt. Dieser Sandwichverbund kann nun weiterverarbeitet werden (z.B. Ausfräsungen für Fenster und Türen, Außenkontur).

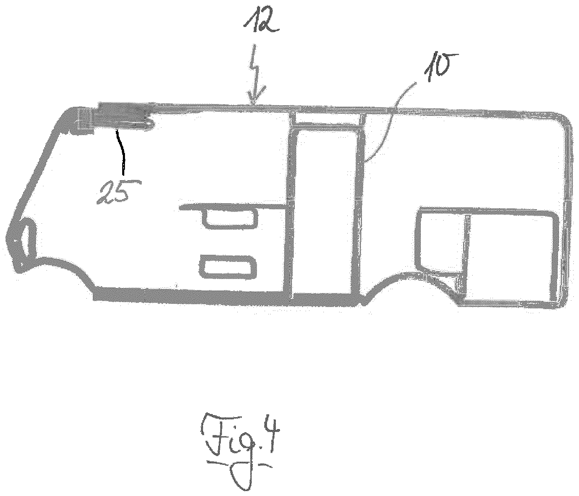

Fig. 4 zeigt die Rahmenstruktur 12 des in Verfahrensvariante 2 (Fig. 2) hergestellten Flächenelements. Die Rahmenstruktur 12 weist einen Türabschnitt 10 auf Die Ecken im Türbereich sind hier nicht mit Versteifungsecken ausgefüllt, da die Ecken der Kontur der Tür folgend gespritzt wurden. Die hier gezeigte Rahmenstruktur soll für eine Seitenwand eines Campingfahrzeuges verwendet werden, bei welchem ein Hubbett im vorderen oberen Bereich angeordnet werden soll. In diesem Bereich ist bei der Rahmenstruktur 12 eine Verstärkung der Rahmenstruktur zu sehen, in dem mehrere Schichten 25 an Rahmenstrukturmaterial übereinander angeordnet sind. Durch die Schichten 25 ist eine gute Verschraubungsmöglichkeit für ein Hubbett gegeben.

## Patentansprüche

1. Verfahren zur Herstellung eines Flächenelements (100, 100', 100") für ein Campingfahrzeug oder Mobilheim, insbesondere Wohnwagen, Reisemobil etc., umfassend folgende Schritte
a) Herstellen einer Rahmenstruktur (6, 12, 20) durch Aufbringen von fließfähigem, aushärtbarem Material in einer gewünschten Form auf eine Unterlage (17);
b) Aushärtenlassen des fließfähigen, aushärtbaren Materials;
c) Verbinden der fertigen Rahmenstruktur mit mindestens einer Deckschicht (7, 16, 23),
wobei entweder die gewünschte Form der Rahmenstruktur (6) in eine Platte (1) aus Isoliermaterial eingebracht, insbesondere eingeschnitten oder eingefräst wird, die Platte anschließend mit einer Deckschicht (4) verbunden wird und dann das fließfähige, aushärtbare Material in die ausgeschnittenen Räume in der Platte zum Erstellen der Rahmenstruktur (6) eingebracht wird,
oder
das fließfähige, aushärtbare Material, inbesondere NC-gesteuert, auf eine von zwei Deckschichten (17) zur Erstellung der Rahmenstruktur (20) aufgebracht wird, anschließend fließfähiges Isoliermaterial in Zwischenräume (14) der Rahmenstruktur eingebracht wird und dann die zweite Deckschicht (23) auf die Rahmenstruktur aufgebracht wird, sodass die Rahmenstruktur und das Isoliermaterial zwischen den beiden Deckschichten angeordnet ist,
oder
das fließfähige, aushärtbare Material (8) auf eine Arbeitsunterlage zur Erstellung der Rahmenstruktur (12) aufgebracht, anschließend die Rahmenstruktur (12) mit einer Deckschicht (13) verbunden wird, anschließend fließfähiges Isoliermaterial in Zwischenräume (14) der Rahmenstruktur (12) eingebracht wird und dann die zweite Deckschicht (16) auf die Rahmenstruktur aufgebracht wird, sodass die Rahmenstruktur und das Isoliermaterial zwischen den beiden Deckschichten angeordnet ist.

2. Verfahren nach Anspruch 1, **dadurch gekennzeichnet, dass** das fließfähige, aushärtbare Material im Gießverfahren eingebracht bzw. aufgebracht wird.

3. Verfahren nach einem der Ansprüche 1 bis 2, **dadurch gekennzeichnet, dass** die Rahmenstruktur (12, 20) in mindestens zwei Arbeitsschritten erstellt wird, wobei in den jeweiligen Arbeitsschritten vorzugsweise unterschiedliche Materialien und/oder unterschiedliche Materialstärken für unterschiedliche Rahmenstrukturabschnitte eingesetzt werden.

4. Verfahren nach einem der Ansprüche 1 bis 3, **dadurch gekennzeichnet, dass** nach dem Aufbringen der zweiten Deckschicht (7, 16, 23) auf die Rahmenstruktur (6, 12, 20) die Sandwichstruktur, bestehend aus zwei Deckschichten (4, 7; 13, 16; 17, 23), Rahmenstruktur und Isoliermaterial (1, 15, 21), weiterverarbeitet wird, indem insbesondere Fenster- und Türbereiche ausgefräst werden und/oder eine Außenkontur eingearbeitet wird.

5. Verfahren nach einem der Ansprüche 1 bis 4, **dadurch gekennzeichnet, dass** das fließfähige, aushärtbare Material, insbesondere eines aus der Gruppe von Kunststoff, faserverstärktem Kunststoff, naturfaserverstärktem Kunststoff, z.B. bambusfaserverstärktem oder durch Reisschalen verstärktem Kunststoff, Harz, Schaum, z.B. PU-Schaum ist.

6. Verfahren nach einem der Ansprüche 1 bis 5, **dadurch gekennzeichnet, dass** vor dem Aufbringen der zweiten Deckschicht (7, 16, 23) die Oberfläche der Verbundstruktur aus Rahmenstruktur (6, 12, 20) und Isoliermaterial (1, 15, 21) kalibriert, z.B. geschliffen, spanabhebend bearbeitet etc. wird.

## Claims

1. A method for producing a surface element (100, 100', 100") for a camping vehicle or a mobile home, in particular a caravan, motorhome, etc., comprising the following steps:
a) producing a frame structure (6, 12, 20) by applying a flowable, hardenable material in a desired form onto a base (17);
b) hardening the flowable, hardenable material;
c) connecting the finished frame structure to at least one top layer (7, 16, 23)
wherein either the desired form of the frame structure (6) is introduced, in particular incised or milled, into a panel (1) made of insulating material, the panel subsequently being connected to a top layer (4) and the flowable, hardenable material then being introduced into the incised spaces in the panel in order to produce a frame structure (6)
or
the flowable, hardenable material is applied, in particular in an NC-controlled manner, onto one of two top layers (17) for producing the frame structure (20), flowable insulating material being subsequently introduced into spaces (14) of the frame structure, and the second top layer (23) then being applied onto the frame structure so that the frame structure and the insulating material are arranged between the two top layers
or
the flowable, hardenable material (8) is applied onto a work base for producing the frame structure (12), the frame structure (12) subsequently being connected to a top layer (13), flowable insulating material subsequently being introduced into spaces (14) of the frame structure (12), and the second top layer (16) then being applied onto the frame structure so that the frame structure and the insulating material are arranged between the two top layers.

2. The method according to claim 1, **characterized in that** the flowable, hardenable material is introduced or applied, respectively, via a casting process.

3. The method according to claim 1 or 2, **characterized in that** the frame structure (12, 20) is produced in at least two work steps, wherein different materials and/or different material thicknesses are preferably used for different frame structure sections in the corresponding work steps.

4. The method according to any one of the claims 1 to 3, **characterized in that** after the application of the second top layer (7, 16, 23) onto the frame structure (6, 12, 20), the sandwich-like structure, consisting of two top layers (4, 7; 13, 16; 17, 23), a frame structure and insulating material (1, 15, 21), is further processed in particular by milling out window and door areas and/or incorporating an outer contour.

5. The method according to any one of the claims 1 to 4, **characterized in that** the flowable, hardenable material is one from the group of plastic, fiber-reinforced plastic, natural-fiber-reinforced plastic, for example bamboo-fiber-reinforced plastic or plastic reinforced by rice husks, resin, foam, for example PU foam.

6. The method according to any one of the claims 1 to 5, **characterized in that** before applying the second top layer (7, 16, 23), the surface of the composite structure consisting of a frame structure (6, 12, 20) and insulating material (1, 15, 21) is calibrated, for example smoothed, machine-processed, etc.

## Revendications

1. Procédé pour la production d'un élément de surface (100, 100', 100") pour un camping-car ou une maison mobile, en particulier une caravane, une autocaravane, etc., comprenant les étapes suivantes :
a) la production d'une structure de cadre (6, 12, 20) par l'application d'un matériau fluide et durcissable dans une forme souhaitée sur une base (17);
b) le durcissement du matériau fluide et durcissable;
c) la connexion de la structure de cadre finie à au moins une couche en haut (7, 16, 23)
dans lequel ou la forme souhaitée de la structure de cadre (6) est introduite, en particulier incisée ou fraisée, dans un panneau (1) fait d'un matériau isolant, ledit panneau étant relié subséquemment à une couche en haut (4) et puis le matériau fluide et durcissable étant introduit dans les espaces incisés dans le panneau pour produire une structure de cadre (6)
ou
le matériau fluide et durcissable est appliqué, en particulier de manière contrôlé à CN, sur une des deux couches en haut (17) pour produire la structure de cadre (20), du matériau fluide et isolant étant introduit subséquemment dans des espaces (14) de la structure de cadre et puis la deuxième couche en haut (23) étant appliquée sur la structure de cadre pour que la structure de cadre et le matériau isolant sont disposés entre les couches en haut
ou
le matériau fluide et durcissable (8) est appliqué sur une base de travail pour produire la structure de cadre (12), ladite structure de cadre (12) étant reliée subséquemment à une couche en haut (13), du matériau fluide et isolant étant introduit subséquemment dans des espaces (14) de la structure de cadre (12) et puis la deuxième couche en haut (16) étant appliquée sur la structure de cadre pour que la structure de cadre et le matériau isolant sont disposés entre les deux couches en haut.

2. Procédé selon la revendication 1, **caractérisé en ce que** le matériau fluide et durcissable est introduit ou appliqué, respectivement, par un procédé de moulage.

3. Procédé selon la revendication 1 ou 2, **caractérisé en ce que** la structure de cadre (12, 20) est produite en au moins deux étapes de travail, des matériaux différents et/ou des épaisseurs de matériau différentes étant utilisés de préférence pour des zones de structure de cadre différents en les étapes de travail correspondant.

4. Procédé selon l'une quelconque des revendications 1 à 3, **caractérisé en ce qu'**après l'application de la deuxième couche en haut (7, 16, 23) sur la structure de cadre (6, 12, 20) la structure en sandwich, contenant deux couches en haut (4, 7; 13, 16; 17, 23), une structure de cadre et du matériau isolant (1, 15, 21), est traité, en particulier en fraisant des zones de fenêtre et de porte et/ou en incorporant un contour extérieur.

5. Procédé selon l'une quelconque des revendications 1 à 4, **caractérisé en ce que** le matériau fluide et durcissable est choisi du groupe consistant en plastique, en plastique renforcé de fibres, en plastique renforcé de fibres naturels, par exemple en plastique renforcé de fibres de bambou ou en plastique renforcé par balle de riz, en résine, en mousse, par exemple en mousse de PU.

6. Procédé selon l'une quelconque des revendications 1 à 5, **caractérisé en ce qu'**avant l'application de la deuxième couche en haut (7, 16, 23) la surface de la structure de composite consistant en une structure de cadre (6, 12, 20) et en matériau isolant (1, 15, 21) est calibrée, par exemple aplanie, usinée, etc.
